# FASCICULE DE BREVET EUROPEEN

(11) **EP 1 507 208 B1**
(45) Date de publication et mention de la délivrance du brevet: **17.03.2010**
(21) Numéro de dépôt: 04291986.0
(22) Date de dépôt: 04.08.2004
(51) Int. Cl.: G06F 11/20, G05B 9/03

(54) **Système de commande d'équipements d'aéronef**
Steuerungssystem für Luftfahrzeuggeräte
Control system for aircraft equipment

(30) Priorité: 12.08.2003 FR 0309862
(43) Date de publication de la demande: 16.02.2005
(73) Titulaire: AIRBUS OPERATIONS (SAS), 31060 Toulouse (FR)
(72) Inventeur: Roux, William, 31520 Ramonville Saint Agne (FR); Vilain, Jean Yves, 31820 Pibrac (FR)
(74) Mandataire: Hauer, Bernard

(56) Documents cités:
- EP-A- 0 229 559
- FR-A- 2 832 011
- HUBACEK P: "THE ADVANCED AVIONICS STANDARD COMMUNICATIONS BUS" SCIENTIFIC HONEYWELLER, HONEYWELL'S CORPORATE. MINNEAPOLIS, US, vol. 11, no. 1, 1991, pages 71-76, XP000289743 ISSN: 0196-8440
- HOYME K ET AL: "ARINC 629 AND SAFEBUS*: DATA BUSES FOR COMMERCIAL AIRCRAFT" SCIENTIFIC HONEYWELLER, HONEYWELL'S CORPORATE. MINNEAPOLIS, US, vol. 11, no. 1, 1991, pages 57-70, XP000289742 ISSN: 0196-8440
- MCSHARRY M E ET AL: "TRIPLEX BUS-CONNECTED INTER-UNIT SELECTED FCS CONFIGURATION" PROCEEDINGS OF THE NATIONAL AEROSPACE AND ELECTRONICS CONFERENCE. (NAECON). DAYTON, MAY 21 - 25, 1984, NEW YORK, IEEE, US, vol. 1 CONF. 36, 1 mai 1984 (1984-05-01), pages 645-651, XP000746254

## Description

La présente invention concerne un système de commande d'équipements d'aéronef, en particulier d'un avion de transport.

Un système de ce type est décrit dans HUBACEK P: "THE ADVANCED AVIONICS STANDARD COMMUNICATIONS BUS" SCIENTIFIC HONEYWELLER, HONEYWELL'S CORPORATE. MINNEAPOLIS, US, vol. 11, no. 1, 1991, pages 71-76, XP000289743 ISSN: 0196-8440.

Plus précisément, ledit système de commande est du type comportant :
- au moins un panneau de commande situé par exemple dans le poste de pilotage de l'aéronef et comprenant une pluralité de moyens de commande (boutons-poussoirs, commutateurs rotatifs, potentiomètres, ...) qui sont susceptibles d'être actionnés par un opérateur, notamment le pilote de l'aéronef ;
- une pluralité d'équipements commandables (climatisation, moyens de dégivrage, ...) de l'aéronef, dont chacun est commandé par un calculateur qui lui est associé, en fonction au moins de l'actionnement d'un moyen de commande également associé dudit panneau de commande ; et
- un ensemble de communication, pour relier ensemble les calculateurs et les moyens de commande qui sont associés.

On sait que les avions de transport civil comportent généralement une dizaine de panneaux de commande du type précité, dont certains sont agencés au plafond du poste de pilotage.

On sait de plus que ledit ensemble de communication comporte un ou plusieurs fils électriques. En effet, chaque moyen de commande du panneau de commande est relié par un fil électrique directement au calculateur de l'équipement qu'il commande.

En raison du nombre élevé de moyens de commande sur un panneau de commande (plus d'une cinquantaine sur certains avions de transport civil), le nombre de fils reliant lesdits moyens de commande aux différents équipements commandables est lui aussi élevé, ce qui représente un encombrement et une masse non négligeables, alors que l'on cherche généralement à réduire le plus possible la masse de l'aéronef et l'encombrement des différents équipements de ce dernier, afin de maximiser la charge utile transportée.

De plus, lesdits panneaux de commande usuels ne comportent pas de moyens permettant de détecter une défaillance desdits fils entre deux opérations consécutives de maintenance de l'aéronef.

La présente invention, qui est définie par la revendication indépendante 1, concerne un système de commande d'équipements d'aéronef, qui permet de remédier aux inconvénients précités.

Pour ce faire, selon l'invention, ledit système de commande, est du type comportant :
- au moins un panneau de commande comprenant une pluralité de moyens de commande qui sont susceptibles d'être actionnés par un opérateur ;
- une pluralité d'équipements commandables de l'aéronef, dont chacun est commandé par au moins un premier calculateur associé, en fonction au moins de l'actionnement d'un moyen de commande également associé dudit panneau de commande ; et
- un ensemble de communication, au moins pour relier ensemble les premiers calculateurs et les moyens de commande qui sont associés,
de plus:
- ledit système de commande comporte, pour au moins certains desdits équipements commandables, en plus dudit premier calculateur associé, à chaque fois un second calculateur associé qui est également susceptible de commander l'équipement commandable correspondant en fonction au moins de l'actionnement du moyen de commande associé ;
- ledit ensemble de communication comporte une première et une seconde voies de communication distinctes, empruntant des chemins différents sur l'aéronef, dont la première voie de communication relie les moyens de commande auxdits premiers calculateurs, et dont la seconde voie de communication relie lesdits moyens de commande auxdits seconds calculateurs ; et
- chacune desdites première et seconde voies de communication comporte, au moins au niveau dudit panneau de commande, au moins deux bus de communication numériques différents.

Ainsi, on obtient à la fois une ségrégation et une redondance des communications destinées à commander lesdits équipements commandables, suite à l'actionnement des moyens de commande. En effet :
- en prévoyant des premier et second calculateurs par équipement commandable, permettant de créer deux voies de communication distinctes, et en faisant emprunter des chemins différents à ces deux voies de communication, par exemple de part et d'autre de l'axe longitudinal de l'aéronef, on obtient ladite ségrégation ; et
- en doublant les bus de communication sur chacune desdites voies de communication, au moins au niveau du panneau de commande, on obtient ladite redondance.

Cette architecture de communication (ségrégée et redondante) présente un très bon niveau de sûreté de fonctionnement. Elle présente également l'avantage de permettre une réduction de masse importante par rapport à un panneau de commande usuel, en raison de la réduction du nombre de fils résultant de l'utilisation de moyens de communication multiplexés (bus de communication numériques).

En outre, tout problème de communication sur un bus de communication numérique du système de commande conforme à l'invention est naturellement détecté et signalé au pilote et/ou à un opérateur de maintenance suivant son importance, alors que sur un système de commande usuel du type précité à fils électriques, la détection d'une rupture d'un fil électrique implique la mise en place de fonctions supplémentaires dans les calculateurs, ainsi que des composants supplémentaires.

Le système de commande conforme à l'invention comporte, pour au moins certains desdits moyens de commande, des moyens de liaison distincts entre lesdits moyens de commande et chacun desdits bus de communication numériques. Ainsi, la ségrégation et la redondance sont également réalisées à l'intérieur même du panneau de commande, depuis un moyen de commande jusqu'aux bus de communication. Cela permet d'avoir quatre chaînes de traitement de l'information relative à l'état du moyen de commande, totalement indépendantes entre elles, ce qui est avantageux en cas de panne d'un composant d'une desdites chaînes de traitement de l'information, puisqu'une telle panne n'affecte que la chaîne de traitement de l'information correspondante, et pas les trois autres chaînes.

Certains des bus de communication numériques sont des liaisons série permettant un fonctionnement mufti-maître asynchrone, comme précisé ci-dessous.

Certains des bus de communication numériques sont des réseaux de type Ethernet bidirectionnels simultanés commutés. Ces réseaux du type AFDX ("Avionics Full Duplex Switched Ethernet") présentent une fiabilité accrue, comme précisé ci-dessus.

En outre, selon l'invention, au moins l'une desdites voies de communication comporte :
- deux bus de communication numériques d'un premier type correspondant à une liaison série permettant un fonctionnement mufti-maître asynchrone, qui sont reliés audit panneau de commande ;
- un bus de communication numérique d'un second type correspondant à un réseau Ethernet bidirectionnel simultané commuté, qui est relié à des calculateurs d'équipements commandables, calculateurs qui sont associés à ladite voie de communication ; et
- deux passerelles de communication pour relier ledit bus dudit second type respectivement auxdits bus dudit premier type.

Cette architecture est avantageuse en ce qu'elle utilise un bus dudit second type pour les communications vers les calculateurs, ce qui permet (comme précisé ci-dessous) des temps de transmission déterministes, sans risquer de gaspiller la bande passante de ce bus dudit second type pour les communications avec les panneaux de commande du fait du raccordement de ces derniers auxdits bus dudit premier type.

Par ailleurs, afin d'accroître la sûreté de fonctionnement dudit système de commande, de façon avantageuse :
- la dernière voie de communication comporte, de plus, au moins un bus de communication numérique auxiliaire dudit premier type, reliant ledit panneau de commande à au moins un calculateur d'au moins un équipement commandable ; et/ou
- la dernière voie de communication comporte, de plus, des liaisons filaires reliant au moins certains des moyens de commande du panneau de commande à au moins une passerelle de communication qui est liée audit bus dudit second type ; et/ou
- au moins l'une desdites voies de communication du système de commande conforme à l'invention comporte, de plus, des liaisons filaires reliant au moins certains des moyens de commande du panneau de commande :
   ■ à au moins un calculateur d'au moins un équipement commandable ; et/ou
   ■ directement à au moins un équipement commandable.

Par ailleurs, dans un mode de réalisation particulier, ledit panneau de commande comporte, de plus, des moyens de signalisation indiquant l'état d'au moins certains desdits équipements commandables, et lesdits moyens de signalisation sont reliés auxdits bus de communication numériques desdites voies de communication.

En outre, le système de commande conforme à l'invention comporte une pluralité de panneaux de commande, et dans un mode de réalisation préféré, chacun desdits panneaux de commande est relié auxdits bus de communication numériques desdites voies de communication.

Ce mode de réalisation préféré permet de réduire la masse et l'encombrement, puisque l'on utilise les mêmes bus de communication pour une pluralité de panneaux de commande. Par ailleurs, il permet de plus d'engendrer des communications entre ces différents panneaux de commande.

Les figures du dessin annexé feront bien comprendre comment l'invention peut être réalisée. Sur ces figures, des références identiques désignent des éléments semblables.

La figure 1 représente pour information un schéma synoptique ne correspondant pas à un mode de réalisation de l'invention.

Les figures 2 à 4 sont les schémas synoptiques de différents modes de réalisation d'un système de commande conforme à l'invention.

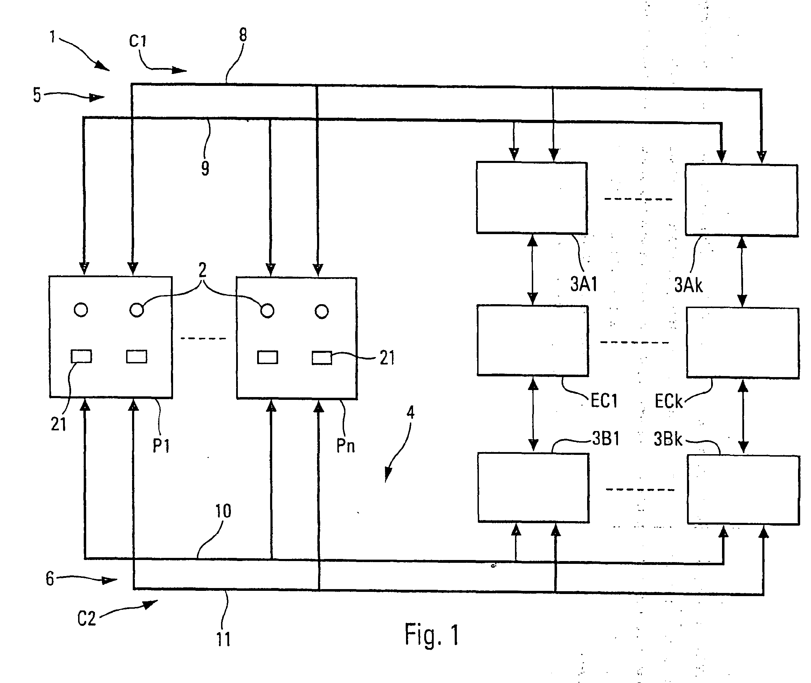

Le système de commande 1 représenté sur les figures 1 à 4, est monté sur un aéronef non représenté, en particulier un avion de transport civil, et est destiné à commander des équipements commandables EC1, ..., ECk de cet aéronef, k étant un entier supérieur à 1, tels que des voyants de signalisation de la cabine des passagers (par exemple pour une signalisation "interdiction de fumer"), une climatisation, des moyens de dégivrage, des pompes, des vannes, ...

Pour ce faire, ledit système de commande 1 est du type connu comportant, comme représenté sur la figure 1 :
- au moins un panneau de commande P1, ..., Pn comprenant une pluralité de moyens de commande 2 (boutons-poussoirs, commutateurs rotatifs, potentiomètres, ...) qui sont susceptibles d'être actionnés par un opérateur, en particulier le pilote de l'aéronef ;
- ladite pluralité d'équipements commandables EC1, ..., ECk de l'aéronef, dont chacun est commandé par au moins un premier calculateur associé 3A1, ..., 3Ak, en fonction au moins de l'actionnement d'un moyen de commande 2 également associé dudit panneau de commande P1, ..., Pn ; et
- un ensemble de communication 4, pour relier ensemble les premiers calculateurs 3A1, ..., 3Ak et les moyens de commande 2 qui sont associés.

De plus:
- ledit système de commande 1 comporte, pour au moins certains desdits équipements commandables EC1, ..., ECk, en plus dudit premier calculateur associé 3A1, ..., 3Ak, à chaque fois un second calculateur associé 3B1, ..., 3Bk qui est également susceptible de commander l'équipement commandable correspondant EC1, ..., ECk, en fonction au moins de l'actionnement du moyen de commande 2 associé ;
- ledit ensemble de communication 4 comporte une première et une seconde voies de communication 5, 6 qui sont distinctes et empruntent des chemins différents C1, C2 sur l'aéronef. La première voie de communication 5 relie les moyens de commande 2 auxdits premiers calculateurs 3A1, ..., 3Ak, et la seconde voie de communication 6 relie les moyens de commande 2 auxdits seconds calculateurs 3B1, ..., 3Bk ;
- ladite première voie de communication 5 comporte, au moins au niveau dudit panneau de commande P1, ..., Pn, deux bus de communication numériques différents 8, 9 ; et
- ladite seconde voie de communication 6 comporte également, au moins au niveau dudit panneau de commande P1, ..., Pn, deux bus de communication numériques différents 10, 11.

Ainsi, on obtient à la fois une ségrégation et une redondance des communications destinées à commander lesdits équipements commandables EC1, ..., ECk, suite à l'actionnement des moyens de commande 2. En effet :
- grâce à deux (lesdits premier et second) calculateurs 3A1, ..., 3Ak ; 3B1, ..., 3Bk par équipement commandable EC1, ..., ECk, permettant de créer les deux voies de communication 5 et 6, et grâce aux chemins différents C1 et C2 de ces deux voies de communication 5 et 6, qui sont par exemple situés de part et d'autre de l'axe longitudinal de l'aéronef, on obtient une ségrégation (ou séparation) des communications. Ainsi, même si un problème empêche les communications d'un côté de l'aéronef, par exemple sur la voie de communication 5, les calculateurs 3B1, ..., 3Bk situés de l'autre côté et associés à la voie de communication 6, continuent à recevoir des consignes et peuvent ainsi toujours commander les différents équipements EC1, ..., ECk ; et
- grâce au doublement des bus de communication 8, 9 ; 10, 11 sur chaque voie de communication 5, 6, au moins au niveau du panneau de commande P1, ..., Pn, on obtient une redondance des communications sur chacune de ces voies de communication 5, 6.

Cette architecture de communication (ségrégée et redondante) présente un très bon niveau de sûreté de fonctionnement. Elle présente également l'avantage de permettre une réduction de masse importante par rapport à un panneau de commande usuel, en raison de la réduction du nombre de fils résultant de l'utilisation de moyens de communication multiplexés (bus de communication numériques 8, 9, 10, 11, ...).

En outre, tout problème de communication sur un bus de communication numérique 8, 9, 10, 11 du système de commande 1 conforme à l'invention, est naturellement détecté et signalé au pilote et/ou à un opérateur de maintenance suivant son importance, alors que sur un système de commande usuel à fils électriques, la détection de la rupture d'un fil électrique implique la mise en place de fonctions supplémentaires dans les calculateurs, ainsi que des composants supplémentaires.

Bien entendu, sans sortir du cadre de la présente invention, ledit système de commande 1 peut comporter uniquement certaines liaisons qui sont réalisées selon le principe conforme à l'invention, les autres liaisons (non représentées sur la figure 1) de ce système de commande 1 vers des équipements (non représentés) de l'aéronef étant, elles, réalisées de façon usuelle (à l'aide de liaisons filaires non multiplexées).

Le système de commande 1 comporte simultanément, comme représenté sur les figures 1 à 4, une pluralité de panneaux de commande P1 à Pn, n étant un entier supérieur à 1.

Selon l'invention, chacun desdits panneaux de commande P1 à Pn est relié aux différents bus de communication numériques 8, 9, 10 et 11. Ceci permet de réduire la masse et l'encombrement, puisque l'on utilise les mêmes bus de communication 8, 9, 10 et 11 pour une pluralité de panneaux de commande P1 à Pn.

Ceci permet la génération de communications entre les différents panneaux de commande P1 à Pn. A titre d'exemple non limitatif, ces communications entre panneaux de commande P1 à Pn peuvent être utilisées pour signaler la défaillance d'un panneau de commande ou d'une partie de panneau de commande, pour éventuellement réaffecter des moyens de commande 2 d'un autre panneau de commande afin de permettre la commande d'équipements commandables EC1, ..., ECk, dont les moyens de commande 2 sont en panne.

Dans un mode de réalisation préféré (non représenté), la ségrégation et la redondance sont aussi réalisées à l'intérieur même de chaque panneau de commande P1, ..., Pn, depuis un moyen de commande 2 jusqu'aux bus de communication numériques 8, 9, 10, 11. Pour ce faire, on utilise des contacts appartenant à des étages distincts dudit moyen de commande 2, reliés à des processeurs distincts alimentés par des alimentations distinctes pour piloter chacun des quatre bus de communication 8, 9, 10, 11. Cela permet d'avoir quatre chaînes de traitement de l'information relative à l'état du moyen de commande 2, totalement indépendantes entre elles, ce qui est avantageux en cas de panne d'un composant d'une desdites chaînes de traitement de l'information, puisque cette panne n'affecte que ladite chaîne de traitement de l'information et pas les trois autres.

Sur la figure 1, les bus de communication numériques 8 à 11 relient directement les panneaux de commande P1 à Pn (plus précisément les moyens de commande 2 de ces panneaux de commande) aux calculateurs 3A1, ..., 3Ak et 3B1, ..., 3Bk qui sont associés aux équipements commandables EC1, ..., ECk.

Certains, desdits quatre bus de communication numériques 8 à 11 sont des liaisons série permettant un fonctionnement multi-maître asynchrone, et de préférence des liaisons définies par la norme CAN (ISO 11898). Aussi, pour des raisons de simplification, on désignera dans la description suivante une telle liaison ou un tel bus : "bus CAN".

Le bus CAN est à haute fiabilité de transmission et à horloge/données multiplexés temporellement, et offre de grandes possibilités d'élasticité du réseau grâce au principe de diffusion de l'information et à une gestion de partage de bus de type CSMA/CA. De plus, il comporte un ensemble de mécanismes de détection et de signalisation d'erreurs qui en font un bus à haut niveau de sécurité.

Ainsi, les principaux avantages d'un bus CAN sont : un fonctionnement multi-maître, une hiérarchisation des messages, une souplesse de configuration, une détection et signalisation d'erreurs, une distinction d'erreurs d'ordre temporaire ou de non fonctionnalité permanente au niveau de l'abonné.

Certains, desdits quatre bus 8 à 11 sont des réseaux de type Ethernet bidirectionnels simultanés commutés, c'est-à-dire des réseaux AFDX ("Avionics Full Duplex Switched Ethernet"). Aussi, pour des raisons de simplification, on désignera dans la description suivante un tel réseau ou un tel bus : "bus AFDX". On notera que dans le cadre de la présente invention :
■ un "réseau Ethernet" est un protocole de réseau local qui permet d'offrir un débit standard de 100 mégabits par seconde. Il est défini par la norme IEEE802.3 et permet d'envoyer des données sous forme numérique par paquets, un paquet étant défini comme un ensemble de données envoyé en une seule fois sur le réseau ;
■ la caractéristique "bidirectionnel simultané" signifie que la ligne de communication permet d'acheminer des données dans les deux sens simultanément ; et
■ la caractéristique "commuté" signifie que les paquets sont commutés dans les commutateurs sur les sorties appropriées.

Le réseau AFDX est un réseau déterministe. L'aspect déterministe est obtenu par le rajout de services de communication sur le réseau Ethernet. Cet aspect déterministe utilise le concept de lien virtuel, dont la bande passante est garantie et ségréguée vis-à-vis des autres communications. On notera, à titre d'illustration, que le bus AFDX fait l'objet de la demande de brevet FR-2 832 011. Les demandes de brevet FR-2 832 010 et FR-2 832 006 concernent également un tel bus AFDX.

Un bus AFDX offre des fonctionnalités améliorées par rapport à un bus CAN notamment en permettant une meilleure fiabilité dans la transmission des informations (temps de transmission déterministe, possibilité de définir des liens virtuels entre des calculateurs donnés reliés à un réseau AFDX en allouant une bande passante à chaque lien virtuel, ...). La notion de "temps de transmission déterministe" signifie que l'on peut connaître à l'avance le temps de transmission. Ce temps ne dépend pas de la charge du bus. Il n'est donc pas nécessaire d'évaluer cette charge pour déterminer ce temps de transmission.

Le système de commande 1 conforme à l'invention comporte à la fois des bus CAN et des bus AFDX.

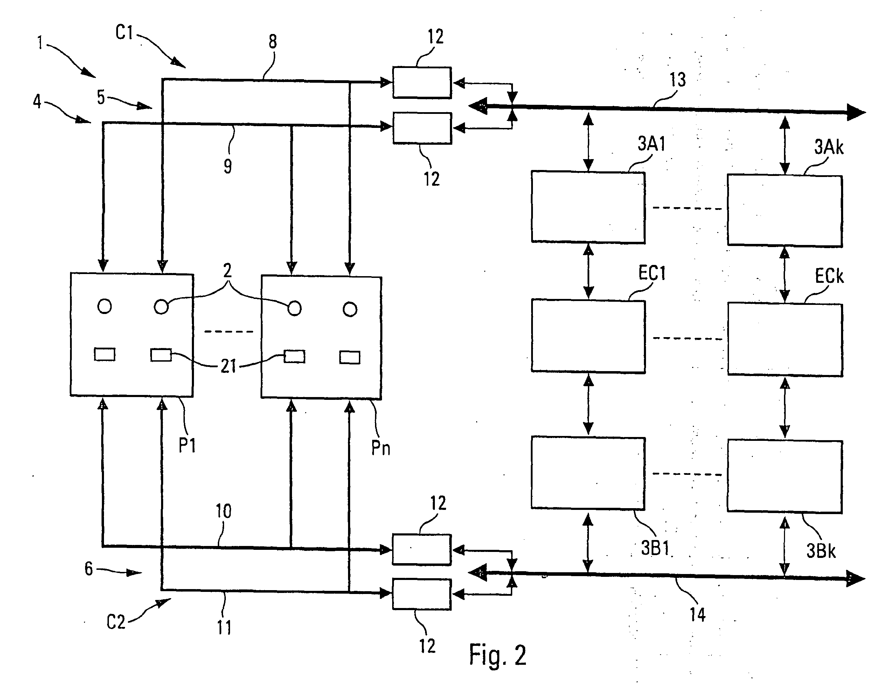

Selon l'invention, représentée sur la figure 2, les quatre bus 8 à 11 reliés aux panneaux de commande P1 à Pn, sont des bus CAN. Chacun de ces quatre bus 8 à 11 est également relié à une passerelle de communication 12, de type usuelle, qui est de plus reliée à un bus 13, 14 de type AFDX (bus 13 pour la voie de communication 5 et bus 14 pour la voie de communication 6) permettant des communications avec les calculateurs 3A1 à 3Ak et 3B1 à 3Bk commandant les équipements EC1 à ECk qui sont contrôlés par les moyens de commande 2 desdits panneaux de commande P1 à Pn.

Cette architecture est avantageuse en ce qu'elle utilise un bus AFDX 13, 14 pour les communications vers lesdits calculateurs 3A1 à 3Ak et 3B1 à 3Bk, ce qui permet des temps de transmission déterministes, sans risquer de gaspiller la bande passante de ce réseau pour les communications avec les panneaux de commande P1 à Pn, du fait du raccordement de ceux-ci aux bus CAN 8 à 11. En effet, un bus AFDX est un bus à haut débit (généralement 100 Mbits/s), dont la bande passante est répartie entre des liens virtuels.

Les panneaux de commande P1 à Pn ne nécessitent pas, quant à eux, un débit de communication aussi élevé. L'avantage de la solution proposée réside dans le fait que chaque bus CAN 8 à 11 permet de centraliser, dans la passerelle 12 raccordée à ce bus CAN, toutes les communications provenant d'une pluralité de panneaux de commande P1 à Pn. Ces derniers sont ainsi reliés au bus AFDX par cette passerelle 1 2, laquelle nécessite un seul raccordement sur ce bus AFDX, ce qui permet d'allouer une seule partie de la bande passante du bus AFDX pour les communications relatives aux différents panneaux de commande P1 à Pn. Cette partie de la bande passante est plus faible que la somme des différentes parties de cette bande passante qui devraient être allouées à chaque panneau de commande P1 à Pn s'il était directement relié au bus AFDX.

On notera qu'une passerelle de communication 12 est un dispositif usuel qui permet d'établir des communications entre des équipements qui communiquent selon des protocoles différents, par exemple entre un équipement communicant selon un protocole AFDX et un autre équipement communicant selon un protocole CAN. Une passerelle est donc un traducteur qui permet de convertir un protocole en un autre protocole.

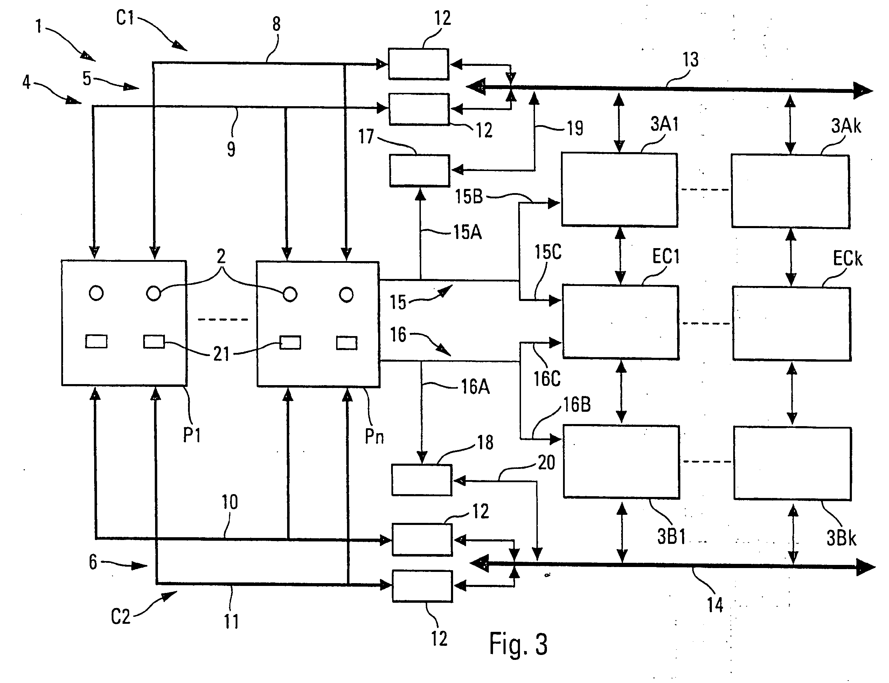

Dans une variante de réalisation de l'invention représentée sur la figure 3 (bus CAN et AFDX couplés par une passerelle 12), la communication par bus d'un panneau de commande Pn vers des calculateurs 3A1, 3B1 correspondant à au moins un équipement EC1 qui est commandé par ce panneau de commande Pn, est doublée d'une liaison filaire directe 15, 16 (sans bus de communication), entre des moyens de commande 2 utilisés pour la commande dudit équipement EC1, et :
- des passerelles 17, 18 (liaisons 15A et 16A) reliées aux mêmes bus AFDX 13 et 14 (liaisons 19 et 20) que des calculateurs 3A1, 3B1 associés audit équipement EC1 commandé ; et/ou
- lesdits calculateurs 3A1 et 3B1 (liaisons 15B et 16B) associés audit équipement EC1 commandé ; et/ou
- directement ledit équipement commandé EC1 (liaisons 15C et 16C).

Cette variante de réalisation permet d'accroître la sûreté de fonctionnement.

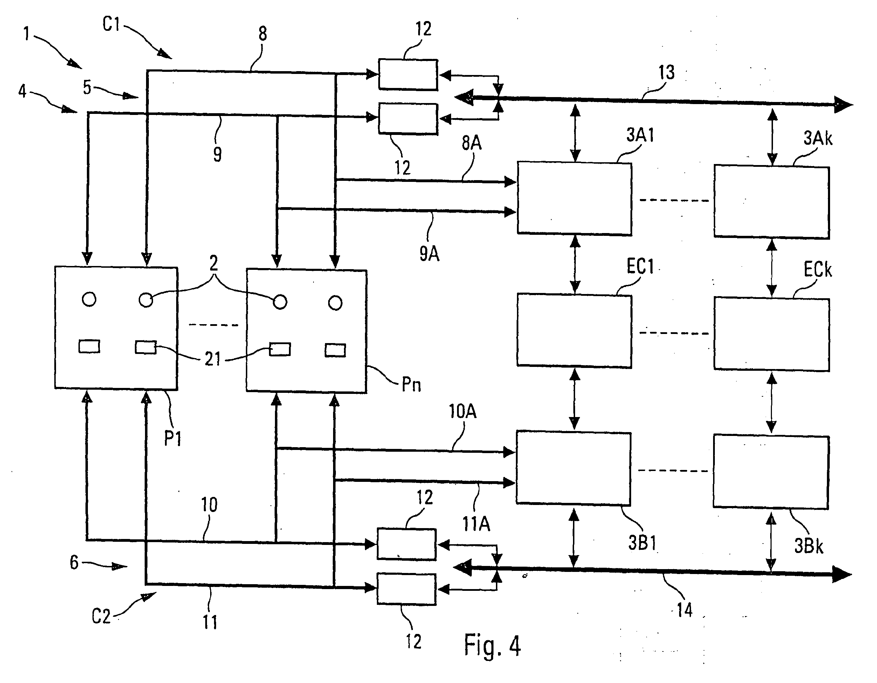

Dans une autre variante de réalisation de l'invention représentée sur la figure 4 (bus CAN et AFDX couplés par une passerelle 12), la communication par bus CAN et AFDX d'au moins un panneau de commande Pn vers des calculateurs 3A1 et 3B1 associés à au moins un équipement EC1 qui est commandé par ce panneau de commande Pn, est doublée par des liaisons 8A, 9A, 10A, 11 A par bus CAN du panneau de commande Pn vers lesdits calculateurs 3A1 et 3B1. Cela permet d'accroître la sûreté de fonctionnement, puisque ledit équipement EC1 peut toujours être commandé au moyen du panneau de commande Pn, en cas de panne des bus 13, 14, de type AFDX.

Par ailleurs, on notera que lorsqu'un panneau de commande P1, Pn comporte des moyens de signalisation 21 destinés à signaler l'état (allumé, éteint, en panne, ...) des équipements EC1, ..., ECk, la présente invention s'applique également à la communication de l'état desdits équipements EC1, ..., ECk vers lesdits moyens de signalisation 21. Un tel mode de réalisation présente l'avantage de permettre l'utilisation des mêmes bus de communication numériques pour à la fois la commande desdits équipements EC1, ..., ECk et la signalisation de leur état, ce qui entraîne une réduction du câblage et donc une diminution de la masse de l'aéronef.

Toutefois, ce partage des moyens de communication ne doit pas être envisagé de façon limitative, et sans sortir du cadre de l'invention, on peut prévoir des bus de communication dédiés à la commande des équipements EC1, ..., ECk (comme décrit précédemment) et d'autres bus de communication, par exemple similaires aux précédents, dédiés à la signalisation de l'état desdits équipements EC1, ..., ECk.

## Revendications

1. Système de commande d'aéronef, comportant :
- une pluralité d'équipements commandables (EC1, ECk) ;
- au moins un premier calculateur (3A1, 3Ak) qui est susceptible de commander au moins l'un desdits équipements commandables (EC1, EC2) ;
- au moins un second calculateur (3B1, 3Bk) qui est également susceptible de commander cet équipement commandable (EC1, ECk) ; et
- un ensemble de communication (4) qui comporte une première et une seconde voies de communication (5, 6) empruntant des chemins différents (C1, C2) sur l'aéronef et comprenant chacune au moins deux bus de communication numériques (8, 9, 10, 11), lesdits premier et second calculateurs étant liés audit ensemble de communication (4),
**caractérisé en ce que** :
- ledit système de commande (1) comporte, de plus, une pluralité de panneaux de commande (P1, Pn), chacun desdits panneaux de commande (P1,Pn) comprenant une pluralité de moyens de commande (2) qui sont susceptibles d'être actionnés par un opérateur ;
- chacune desdites première et seconde voies de communication (5, 6) qui sont distinctes comporte, au moins au niveau desdits panneaux de commande (P1, Pn), au moins deux bus de communication numériques (8, 9 ; 10, 11) ;
- ledit système de commande (1) comporte une pluralité de premiers calculateurs (3A1, 3Ak) et une pluralité de seconds calculateurs (3B1, 3Bk) de manière à avoir deux calculateurs associés, à savoir un premier et un second calculateurs, par équipement commandable ;
- chacun desdits équipements commandables (EC1, ECk) est susceptible d'être commandé par le premier calculateur (3A1, 3Ak) associé et par le second calculateur (3B1, 3Bk) associé, en fonction de l'actionnement d'un moyen de commande (2) également associé ;
- ladite première voie de communication (5) relie lesdits moyens de commande (2) à ladite pluralité de premiers calculateurs (3A1, 3Ak) ;
- ladite seconde voie de communication (6) relie lesdits moyens de commande (2) à ladite pluralité de seconds calculateurs (3B1, 3Bk) ; et
- au moins l'une desdites voies de communication (5, 6) comporte :
• deux bus de communication numériques (8, 9 ; 10, 11) d'un premier type correspondant à une liaison série permettant un fonctionnement multi-maître asynchrone, dont chacun est relié à ladite pluralité de panneaux de commande (P1, Pn);
• un bus de communication numérique (13, 14) d'un second type correspondant à un réseau Ethernet bidirectionnel simultané commuté, qui est relié à des calculateurs (3A1, 3Ak; 3B1, 3Bk) d'équipements commandables (EC1, ECk), calculateurs qui sont associés à ladite voie de communication (5, 6) ; et
• deux passerelles de communication (12) pour relier ledit bus (13, 14) dudit second type respectivement auxdits bus (8, 9 ; 10, 11) dudit premier type.

2. Système selon la revendication 1,
**caractérisé en ce qu'**il comporte, pour au moins certains desdits moyens de commande (2), des moyens de liaison distincts entre lesdits moyens de commande (2) et chacun desdits bus de communication numériques (8, 9, 10, 11).

3. Système selon l'une des revendications 1 et 2,
**caractérisé en ce qu'**au moins l'une desdites voies de communication (5, 6) compote, de plus, au moins un bus de communication numérique auxiliaire (8A, 9A, 10A, 11A) dudit premier type, reliant ledit panneau de commande (Pn) à au moins un calculateur (3A1, 3B1) d'au moins un équipement commandable (EC1).

4. Système selon l'une des revendications 1 à 3,
**caractérisé en ce qu'**au moins l'une desdites voies de communication (5, 6) comporte, de plus, des liaisons filaires (15A, 16A) reliant au moins certains des moyens de commande (2) du panneau de commande (Pn) à au moins une passerelle de communication (17, 18) qui est liée audit bus (13, 14) dudit second type.

5. Système selon l'une quelconque des revendications précédentes,
**caractérisé en ce qu'**au moins l'une desdites voies de communication (5, 6) comporte, de plus, des liaisons filaires (15B, 16B) reliant au moins certains des moyens de commande (2) du panneau de commande (Pn) à au moins un calculateur (3A1, 3B1) d'au moins un équipement commandable (ECk).

6. Système selon l'une quelconque des revendications précédentes,
**caractérisé en ce qu'**au moins l'une desdites voies de communication (5, 6) comporte, de plus, des liaisons filaires (15C, 16C) reliant au moins certains des moyens de commande (2) du panneau de commande (Pn) directement à au moins un équipement commandable (ECk).

7. Système selon l'une quelconque des revendications précédentes,
**caractérisé en ce que** ledit panneau de commande (P1, Pn) comporte, de plus, des moyens de signalisation (21) indiquant l'état d'au moins certains desdits équipements commandables (EC1, ECk), et **en ce que** lesdits moyens de signalisation (21) sont reliés auxdits bus de communication numériques (8, 9, 10, 11) desdites voies de communication (5, 6).

8. Système selon l'une quelconque des revendications précédentes,
**caractérisé en ce que** lesdites première et seconde voies de communication (5, 6) sont agencées de part et d'autre de l'axe longitudinal de l'aéronef.

## Claims

1. An aircraft control system, comprising:
- a plurality of controllable pieces of equipment (EC1, ECk);
- at least a first computer (3A1, 3Ak) which is able to control at least one of said controllable pieces of equipment (EC1, ECk);
- at least a second computer (3B1, 3ABk) which is also able to control said controllable piece of equipment (EC1, ECk) ;and
- a communication system (4) which comprises a first and a second communication channel (5, 6) following different paths (C1, C2) in the aircraft, each of said first and second communication channels (5, 6) comprising at least two different digital communication buses (8, 9; 10, 11),said first and second computers being linked to said communication system (4),
**characterized in that**:
- said control system (1) comprises further a plurality of control panels (P1, Pn), each of said control panels (P1, Pn) comprising a plurality of control means (2) which can be operated by an operator;
- each of said first and second communication channels (5, 6) which are separate comprises, at least at the level of said control panels (P1, Pn), at least two digital communication buses (8,9;10;11);
- said control system (1) comprises further a plurality of first computers (3A1, 3Ak) and a plurality of second computers (3B1, 3Bk) in order to have two associated computers, namely a first computer and a second computer, per piece of equipment;
- each of said pieces of equipment (EC1, Eck) is able to be controlled by the first associated computer (3A1, 3Ak) and by the second associated computer (3B1, 3Bk) in accordance with the operation of an also associated control means (2);
- said first communication channel (5) connects said control means (2) to said first computers (3A1, 3Ak);
- said second communication channel (6) connects said control means (2) to said second computers (3B1, 3Bk); and
- at least one of said communication channels (5, 6) comprises:
. two digital communication buses (8, 9; 10, 11) of a first type corresponding to a serial link permitting asynchronous multi-master operation, each of them being linked to said control panels (P1, Pn);
. a digital communication bus (13, 14) of a second type corresponding to a full duplex switched Ethernet network, which is linked to computers (3A1, 3Ak; 3B1, 3Bk) of controllable pieces of equipment (EC1, ECk), these computers being associated with said communication channel (5, 6); and
. two gateways (12) for linking said bus (13, 14) of said second type respectively to said buses (8, 9; 10, 11) of said first type.

2. The system as claimed in claim 1, **characterized in that** it comprises, for at least some of said control means (2), separate linking means between said control means (2) and each of said digital communication buses (8, 9, 10, 11).

3. The system as claimed in one of claims 1 and 2, **characterized in that** said communication channel (5, 6) also comprises at least one auxiliary digital communication bus (8A, 9A, 10A, 11A) of said first type, connecting said control panel (Pn) to at least one computer (3A1, 3B1) of at least one controllable piece of equipment (EC1).

4. The system as claimed in one of claims 1 to 3, **characterized in that** said communication channel (5, 6) also comprises cable links (15A, 16A) connecting at least some of the control means (2) of the control panel (Pn) to at least one gateway (17, 18) which is connected to said bus (13, 14) of said second type.

5. The system as claimed in any one of the preceding claims, **characterized in that** at least one of said communication channels (5, 6) also comprises cable links (15B, 16B) connecting at least some of the control means (2) of the control panel (Pn) to at least one computer (3A1, 3B1) of at least one controllable piece of equipment (ECk).

6. The system as claimed in any one of the preceding claims, **characterized in that** at least one of said communication channels (5, 6) also comprises cable links (15C, 16C) connecting at least some of the control means (2) of the control panel (Pn) directly to at least one controllable piece of equipment (ECk).

7. The system as claimed in any one of the preceding claims, **characterized in that** said control panel (P1, Pn) also comprises signaling means (21) indicating the state of at least some of said controllable pieces of equipment (EC1, ECk), and **in that** said signaling means (21) are connected to said digital communication buses (8, 9, 10, 11) of said communication channels (5, 6).

8. The system as claimed in any one of the preceding claims, **characterized in that** said first and second communication channels (5, 6) are positioned on either side of the longitudinal axis of the aircraft.

## Patentansprüche

1. Luftfahrzeugsteuerungssystem, umfassend:
- eine Vielzahl von steuerbaren Geräten (EC1, ECk);
- mindestens einen ersten Rechner (3A1, 3Ak), der mindestens eines der steuerbaren Geräte (EC1, EC2) steuern kann;
- mindestens einen zweiten Rechner (3B1, 3Bk), der ebenfalls dieses steuerbare Gerät (EC1, ECk) steuern kann; und
- eine Kommunikationsanordnung (4), die einen ersten und einen zweiten Verbindungsweg (5, 6) umfasst, die in dem Luftfahrzeug verschiedene Wege (C1, C2) benutzen und jeweils mindestens zwei digitale Kommunikationsbusse (8, 9, 10, 11) umfassen, wobei die ersten und zweiten Rechner mit der Kommunikationsanordnung (4) verbunden sind,
**dadurch gekennzeichnet, dass:**
- das Steuerungssystem (1) ferner eine Vielzahl von Bedienfeldern (P1, Pn) umfasst, wobei jedes der Bedienfeldern (P1, Pn) eine Vielzahl von Steuerungsmitteln (2) umfasst, die von einer Bedienungsperson betätigt werden können;
- wobei jeder der ersten und zweiten Verbindungswege (5, 6), die unterschiedlich sind, mindestens an den Bedienfeldern (P1, Pn) mindestens zwei digitale Kommunikationsbusse (8, 9; 10, 11) umfasst;
- wobei das Steuerungssystem (1) eine Vielzahl von ersten Rechnern (3A1, 3Ak) und eine Vielzahl von zweiten Rechnern (3B1, 3Bk) umfasst, so dass man für jedes steuerbare Gerät über zwei verknüpfte Rechner, nämlich einen ersten und einen zweiten Rechner, verfügt;
- wobei jedes der steuerbaren Geräte (EC1, ECk) von dem verknüpften ersten Rechner (3A1, 3Ak) und von dem verknüpften zweiten Rechner (3B1, 3Bk) je nach der Betätigung eines ebenfalls verknüpften Steuerungsmittels (2) gesteuert werden kann;
- der erste Verbindungsweg (5) die Steuerungsmittel (2) mit der Vielzahl von ersten Rechnern (3A1, 3Ak) verbindet;
- der zweite Verbindungsweg (6) die Steuerungsmittel (2) mit der Vielzahl von zweiten Rechnern (3B1, 3Bk) verbindet; und
- mindestens einer der Verbindungswege (5, 6) folgendes umfasst:
• zwei digitale Kommunikationsbusse (8, 9; 10, 11) einer ersten Art, die einer seriellen Verbindung entspricht, die einen asynchronen Multimaster-Betrieb ermöglicht, von denen jeder mit der Vielzahl von Bedienfeldern (P1, Pn) verbunden ist;
• einen digitalen Kommunikationsbus (13, 14) einer zweiten Art, die einem vermittelten simultanen bidirektionalen Ethernet-Netz entspricht, das mit Rechnern (3A1, 3Ak; 3B1, 3Bk) von steuerbaren Geräten (EC1, ECk) verbunden ist, die mit dem Verbindungsweg (5, 6) verknüpft sind; und
• zwei Kommunikations-Gateways (12), um den Bus (13, 14) der zweiten Art jeweils mit den Bussen (8, 9; 10, 11) der ersten Art zu verbinden.

2. System nach Anspruch 1,
**dadurch gekennzeichnet, dass** es mindestens für bestimmte der Steuerungsmittel (2) unterschiedliche Verbindungsmittel zwischen den Steuerungsmitteln (2) und jedem der digitalen Kommunikationsbusse (8, 9, 10, 11) umfasst.

3. System nach einem der Ansprüche 1 und 2,
**dadurch gekennzeichnet, dass** mindestens einer der Verbindungswege (5, 6) ferner mindestens einen digitalen Hilfskommunikationsbus (8A, 9A, 10A, 11A) der ersten Art umfasst, der das Bedienfeld (Pn) mit mindestens einem Rechner (3A1, 3B1) mindestens eines steuerbaren Geräts (EC1) verbindet.

4. System nach einem der Ansprüche 1 bis 3,
**dadurch gekennzeichnet, dass** mindestens einer der Verbindungswege (5, 6) ferner drahtgebundene Verbindungen (15A, 16A) umfasst, die mindestens bestimmte der Steuerungsmittel (2) des Bedienfelds (Pn) mit mindestens einem Kommunikations-Gateway (17, 18) verbinden, das mit dem Bus (13, 14) der zweiten Art verbunden ist.

5. System nach einem der vorhergehenden Ansprüche,
**dadurch gekennzeichnet, dass** mindestens einer der Verbindungswege (5, 6) ferner drahtgebundene Verbindungen (15B, 16B) umfasst, die mindestens bestimmte der Steuerungsmittel (2) des Bedienfelds (Pn) mit mindestens einem Rechner (3A1, 3B1) mindestens eines steuerbaren Geräts (ECk) verbinden.

6. System nach einem der vorhergehenden Ansprüche,
**dadurch gekennzeichnet, dass** mindestens einer der Verbindungswege (5, 6) ferner drahtgebundene Verbindungen (15C, 16C) umfasst, die mindestens bestimmte der Steuerungsmittel (2) des Bedienfelds (Pn) direkt mit mindestens einem steuerbaren Gerät (ECk) verbinden.

7. System nach einem der vorhergehenden Ansprüche,
**dadurch gekennzeichnet, dass** das Bedienfeld (P1, Pn) ferner Signalgebungsmittel (21) umfasst, die den Zustand mindestens bestimmter der steuerbaren Geräte (EC1, ECk) angeben, und dass die Signalgebungsmittel (21) mit den digitalen Kommunikationsbussen (8, 9, 10, 11) der Verbindungswege (5, 6) verbunden sind.

8. System nach einem der vorhergehenden Ansprüche,
**dadurch gekennzeichnet, dass** die ersten und zweiten Verbindungswege (5, 6) auf beiden Seiten der Längsachse des Luftfahrzeugs angeordnet sind.
